# EUROPEAN PATENT APPLICATION

(11) **EP 4 621 923 A1**
(43) Date of publication of application: **24.09.2025**
(21) Application number: 24219818.2
(22) Date of filing: 13.12.2024
(51) Int. Cl.: H01M 10/42, H01M 10/48, H01M 50/209, H01M 50/507, H01M 50/519, H01M 50/569

(54) **BATTERY MODULE AND BATTERY PACK HAVING THE SAME**

(30) Priority: 18.03.2024 KR 20240037467
(71) Applicant: SAMSUNG SDI CO., LTD., Yongin-si, Gyeonggi-do 17084 (KR)
(72) Inventor: Kim, Young Deok, 17084 Yongin-si, Gyeonggi-do (KR)
(74) Representative: Gulde & Partner

(57) **Abstract**

A battery module includes: a battery array including a plurality of battery cells connected by a plurality of bus bars, and having a length in a first direction and a width in a second direction perpendicular to the first direction; a flat plate holder on the battery array to fix the bus bars; at least one coupling portion protruding from the flat plate holder in a third direction perpendicular to the first direction and the second direction, and to apply an elastic force in one of the first direction or the second direction; and a battery controller on the flat plate holder and fixed to the coupling portion by the elastic force, the battery controller to detect operating states of the battery cells and individually control the battery cells.

## Description

### BACKGROUND

### 1. Field

Aspects of embodiments of the present disclosure relate to a battery module including a battery management system (BMS), and a battery pack including the battery module.

### 2. Description of the Related Art

Battery modules including a plurality of battery cells, and battery packs including a plurality of battery modules, are widely used to provide power that is greater (e.g., much greater) than the energy storage capacity of batteries. Recently, as the number of transportation devices that use electricity as power sources increases, the demand for high-capacity battery packs have increased.

The battery module includes a plurality of battery cells that are provided as individual batteries, like secondary batteries. The battery cells may be arranged along one direction, fixed by a module frame, and connected to each other by a plurality of bus bars arranged on the module frame to detect electrical characteristics of individual cells.

The bus bars are fixed by a single holder, and a battery control system that individually detects and processes signals of the battery cells, respectively, is arranged on the holder, such that the battery cells may be controlled to function under set operating conditions.

The above information disclosed in this Background section is for enhancement of understanding of the background of the present disclosure, and therefore, it may contain information that does not constitute related (or prior) art.

### SUMMARY

A battery control system may be fixed to a holder by heat fusion or a bolt structure. However, the fixing of the battery control system by heat fusion may cause an increase in assembly costs and quality control costs. The fixing of the battery control system by a bolt structure using bolts may case a reduction in a cell capacity depending on the height of the nuts connected thereto, which may become an obstacle to improving battery module manufacturing costs and module capacity.

Therefore, a battery module having a battery control system coupling structure that may be used instead of heat fusion or a bolt coupling may be desired, as well as a battery pack including the battery module.

One or more embodiments of the present disclosure may be directed to a battery module including a battery control unit that is fixed by a coupling portion provided integrally with a flat plate holder covering the battery cell.

One or more embodiments of the present disclosure may be directed to a battery pack including the battery module.

These and other aspects and features of the present disclosure will be described in or will be apparent from the following description of embodiments of the present disclosure.

According to one or more embodiments of the present disclosure, a battery module includes: a battery array including a plurality of battery cells connected by a plurality of bus bars, and having a length in a first direction and a width in a second direction perpendicular to the first direction; a flat plate holder on the battery array to fix the bus bars; at least one coupling portion protruding from the flat plate holder in a third direction perpendicular to the first direction and the second direction, and configured to apply an elastic force in one of the first direction or the second direction; and a battery controller on the flat plate holder and fixed to the coupling portion by the elastic force, the battery controller being configured to detect operating states of the battery cells and individually control the battery cells. An elastic body may be arranged inside the coupling portion, which is fit into the battery controller. The elastic body may apply the elastic body.

In an embodiment, the coupling portion may include: a body protruding from the flat plate holder, and configured to be inserted into a coupling hole of the battery controller, the body including a first pillar and a second pillar spaced from each other, inner surfaces of the first pillar and the second pillar facing each other to define a gap space therebetween; a head on an upper surface of the battery controller coupled to the body, and extending from upper ends of the first pillar and the second pillar in one of the first direction or the second direction; and elastic bodies fixed to the inner surfaces of the first pillar and the second pillar facing each other in the gap space, and configured to generate the elastic force to press and fix the body to the battery controller.

In an embodiment, the flat plate holder may include a coupling step portion that surrounds the body, and has a step with respect to an upper surface thereof.

In an embodiment, the coupling step portion may have a line-shaped holder slot passing through a bottom surface thereof, and the first pillar and the second pillar may be located symmetrically with each other with respect to the holder slot.

In an embodiment, the first pillar and the second pillar may include at least one coupling reinforcement protrusion on an outer surface thereof corresponding to an inner surface from among the inner surfaces to reinforce a coupling force for the battery controller.

In an embodiment, the body may have vertical cutting surfaces aligned side-by-side with each other in one of the first direction or the second direction, and spaced from the coupling hole.

In an embodiment, the elastic bodies may include: a pair of connection straps coupled to a pair of the inner surfaces facing each other, the pair of connection straps being spaced from each other in the gap space, having a first elastic modulus, and being initially compressed; and a connection strap connecting the pair of connection straps to each other in the gap space, the connection strap having a second elastic modulus greater than the first elastic modulus, and being initially compressed.

In an embodiment, the pair of connection straps may include: a first vertical strap coupled to the first pillar and extending in the third direction; and a second vertical strap coupled to the second pillar and extending in the third direction. The connection strap may include a horizontal strap connecting the first vertical strap and the second vertical strap to each other in one of the first direction or the second direction.

In an embodiment, each of the first vertical strap and the second vertical strap may include: an upper coupling end connected to an upper portion of a corresponding inner surface from among the inner surfaces, and extending downward in the third direction; and a lower coupling end connected to a lower portion of the corresponding inner surface, and extending upward in the third direction. The horizontal strap may be connected to a connection portion of the upper coupling end and the lower coupling end.

In an embodiment, the upper coupling end and the lower coupling end may have one of a planar shape or a curved shape.

In an embodiment, the horizontal strap may include one of a symmetrical strap having at least one downwardly extending V-shaped cross-section or a cylindrical strap having a circular cross-section.

In an embodiment, each of the first vertical strap and the second vertical strap may further include an intermediate coupling end extending in the third direction, and connecting the upper coupling end and the lower coupling end to each other. The horizontal strap may include a closed loop shape connected to a first connection portion connected to the upper coupling end and the intermediate coupling end and a second connection portion connected to the lower coupling end and the intermediate coupling end.

In an embodiment, the first vertical strap and the second vertical strap may have different sizes from each other.

In an embodiment, the pair of connection straps may include: an upper strap commonly located above the first pillar and the second pillar, and extending in one of the first direction or the second direction; and a lower strap commonly located below the first pillar and the second pillar, and extending in one of the first direction or the second direction. The connection strap may include a vertical strap connecting the upper strap and the lower strap to each other in the third direction.

In an embodiment, the upper strap and the lower strap may each have a curved shape including an inflection portion, and the vertical strap may be connected to the inflection portion of the upper strap and the inflection portion of the lower strap.

In an embodiment, the flat plate holder may include an alignment pin protruding from an upper surface of the flat plate holder, and the battery controller may have an alignment hole into which the alignment pin may be configured to be inserted to determine a relative position of the battery controller with respect to the flat plate holder.

In an embodiment, the plurality of battery cells may include a secondary battery configured to be reversibly charged and discharged.

According to one or more embodiments of the present disclosure, a battery pack includes: a plurality of battery modules aligned along a lower housing, and electrically connected to each other; and an upper housing coupled to the lower housing to separate the battery modules from an outside. The battery modules include: a battery array including a plurality of battery cells connected by a plurality of bus bars, and having a length in a first direction and a width in a second direction perpendicular to the first direction; a flat plate holder on the battery array to fix the bus bars; at least one coupling portion protruding from the flat plate holder in a third direction perpendicular to the first direction and the second direction, and configured to apply an elastic force in one of the first direction or the second direction; and a battery controller on the flat plate holder to be fixed to the coupling portion by the elastic force, and configured to detect operating states of the battery cells to individually control the battery cells.

In an embodiment, the coupling portion may include: a body protruding from the flat plate holder and configured to be inserted into a coupling hole of the battery controller, the body including a first pillar and a second pillar spaced from each other, inner surfaces of the first pillar and the second pillar facing each other to define a gap space therebetween; a head extending from upper ends of the first pillar and the second pillar in one of the first direction or the second direction in an upper portion of the battery controller, and including a locking step for the battery controller coupled to the body; and elastic bodies fixed to the inner surfaces facing each other in the gap space, and configured to generate the elastic force to press and fix the body to the battery controller.

In an embodiment, the elastic bodies may include: a pair of connection straps coupled to a pair of the inner surfaces facing each other, the pair of connection straps being spaced from each other in the gap space, having a first elastic modulus, and being initially compressed; and a connection strap connecting the pair of connection straps to each other in the gap space, the connection strap having a second elastic modulus greater than the first elastic modulus, and being initially compressed.

According to some embodiments of the present disclosure, a battery module may include a coupling part that may connect (e.g., couple or attach) a battery control unit (e.g., a battery controller) to a flat plate holder that secures a bus bar without using a separate heat fusion or bolting process. The coupling part may be provided integrally with the flat plate holder, and an elastic body may be placed inside the coupling part, such that the battery control part and the coupling part may be stably brought into close contact with each other by an elastic force.

According to some embodiments of the present disclosure, even when a shock or a vibration is applied to the battery module, the battery control unit may be stably fixed to the flat plate holder, and thus, the operational reliability and stability of the battery pack including the battery module may be improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view showing a battery module according to one or more embodiments of the present disclosure.
FIG. 2 illustrates an exploded perspective view of the battery module illustrated in FIG. 1.
FIG. 3A illustrates a perspective view showing a battery cell illustrated in FIG. 2.
FIG. 3B illustrates a cross-sectional view of the battery cell taken along the line a-a' illustrated in FIG. 3A.
FIG. 4A illustrates a perspective view showing a coupled state of a coupling portion and a battery controller in a first direction.
FIG. 4B illustrates a perspective view showing a coupled state of the coupling portion and the battery controller in a second direction.
FIG. 5 illustrates coupling holes and alignment holes arranged in the battery controller according to one or more embodiments of the present disclosure.
FIG. 6A illustrates a plan view showing the coupling portion of the battery module illustrated in FIG. 1.
FIG. 6B illustrates a cross-sectional view of the coupling portion taken along the line b-b' illustrated in FIG. 6A.
FIG. 7 illustrates a perspective view showing an arrangement relationship between a flat plate holder and the coupling portion according to one or more embodiments of the present disclosure.
FIGS. 8A-8D illustrate various embodiments of an elastic body illustrated in FIG. 6B.
FIG. 9 illustrates a top perspective view showing a battery pack including the battery module illustrated in FIG. 1.
FIG. 10 illustrates a perspective view showing the battery pack of FIG. 9 with an upper housing removed.

### DETAILED DESCRIPTIONS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

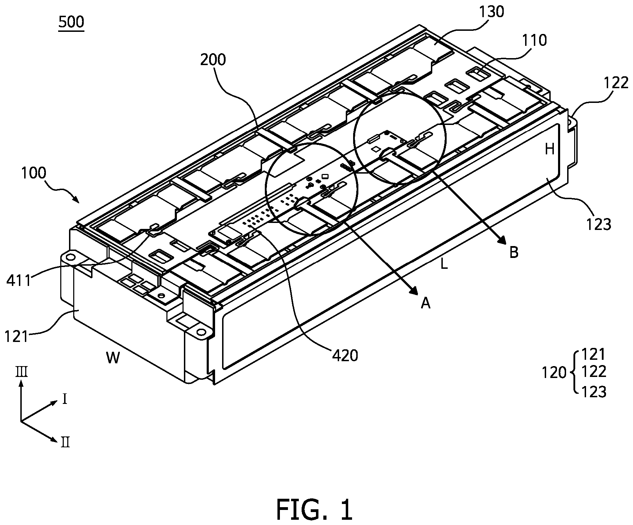

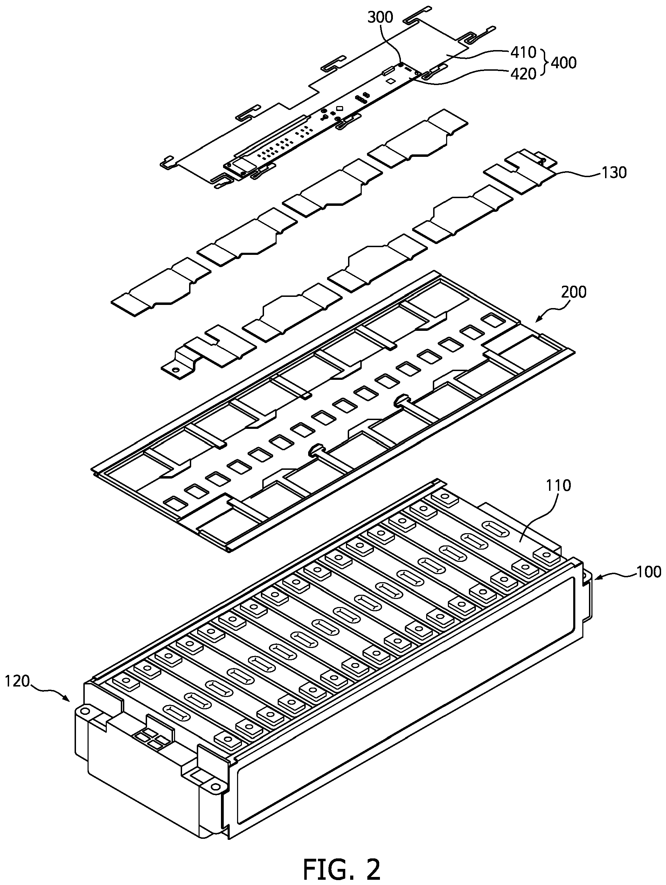

FIG. 1 illustrates a perspective view showing a battery module according to one or more embodiments of the present disclosure. FIG. 2 illustrates an exploded perspective view of the battery module illustrated in FIG. 1.

Referring to FIGS. 1 and 2, a battery module 500 according to one or more embodiments of the present disclosure may include a battery array 100 including a plurality of battery cells 110, a flat plate holder 200 that fixes bus bars 130, at least one coupling portion 300 protruding from the flat plate holder 200, and a battery controller 400 that is fixed to the flat plate holder 200 by the coupling portion 300 to individually control the battery cells 110.

In some embodiments, the battery array 100 may include a battery frame 120 having a hexahedral shape with a length L in a first direction I, a width W in a second direction II perpendicular to the first direction I, and a height H in a third direction III perpendicular to the first and second directions I and II. The plurality of battery cells 110 may be aligned and fixed inside the battery frame 120 along the first direction I.

The battery cells 110 may be aligned along the first direction I on a bottom plate constituting the battery frame 120, and may be fixed by a front end plate 121, a rear end plate 122, and a side plate (or side plates) 123.

Accordingly, the battery cells 110 aligned along the first direction I may be fixed inside the battery frame 120 having a hexahedral shape. The battery frame 120 may be formed of various suitable materials in various suitable shapes, as long as the battery frame 120 stably fixes the aligned battery cells 110 and is connected to adjacent battery modules 500.

The battery cell 110 may include various suitable unit cells capable of generating electrical energy. Hereinafter, the battery cell 110 may be configured as a secondary battery 90 that may reversibly perform charging and discharging.

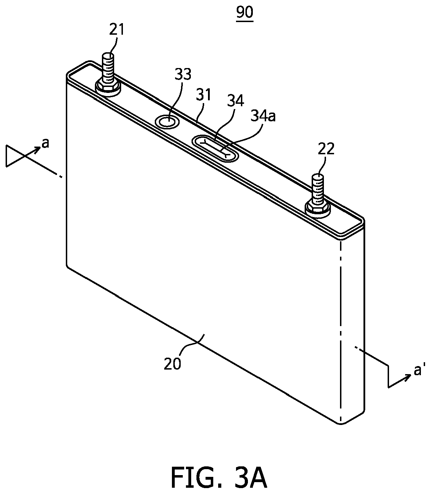

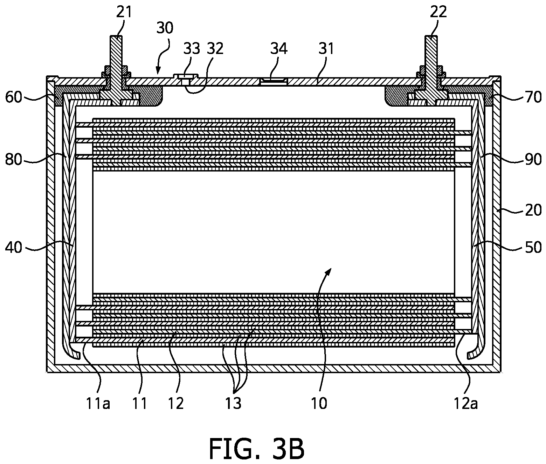

FIG. 3A illustrates a perspective view showing a battery cell illustrated in FIG. 2. FIG. 3B illustrates a cross-sectional view of the battery cell taken along the line a-a' illustrated in FIG. 3A.

Referring to FIGS. 3A and 3B, the secondary battery 90 according to one or more embodiments of the present disclosure may include at least one electrode assembly 10 wound or laminated with a separator 13 (e.g., an insulator) between a positive electrode plate 11 and a negative electrode plate 12, a case 20 in which the electrode assembly 10 is built or accommodated, and a cap assembly 30 connected to (e.g., coupled to or attached to) an opening of the case 20.

The secondary battery 90 according to the present embodiment is described in more detail as an example of a lithium ion battery having a rectangular shape. However, the present disclosure is not limited thereto, and various suitable kinds of batteries, such as lithium polymer batteries or cylindrical batteries, may be applied.

The positive electrode plate 11 and the negative electrode plate 12 may include a coated portion, which is a region where an active material is applied to a current collector formed of a thin metal foil, and uncoated portions 11a and 12a, which are regions where an active material is not applied thereto.

The positive electrode plate 11 and the negative electrode plate 12 are wound with the separator 13 (e.g., the insulator) therebetween. However, the present disclosure is not limited thereto, and the electrode assembly 10 may have a structure in which a positive electrode and a negative electrode formed of a plurality of sheets are alternately stacked with a separator therebetween.

The case 20 forms the overall exterior of the secondary battery 90, and may be formed of a conductive metal, such as aluminum, an aluminum alloy, or nickel-plated steel. In addition, the case 20 may provide a space in which the electrode assembly 10 is accommodated.

The cap assembly 30 may include a cap plate 31 that covers the opening of the case 20. The case 20 and the cap plate 31 may be formed of a conductive material. Positive and negative electrode terminals 21 and 22 that may be electrically connected to the positive electrode plate 11 and the negative electrode plate 12, respectively, may be installed to protrude outward through the cap plate 31.

In other words, the positive electrode terminal 21 and the negative electrode terminal 22 may be arranged at opposite ends of the case 20, respectively, that protrudes outward and extends in the second direction II.

As illustrated in FIG. 1, the secondary batteries 90 aligned along the first direction I may be arranged so that the positive electrode terminals 21 and negative electrode terminals 22 are alternately positioned. Accordingly, the secondary batteries 90 may be connected in series by the bus bars 130, which will be described in more detail below, and may function as an energy source having an output that increases in proportion to the number of secondary batteries 90 that are connected in series.

The cap plate 31 may be formed of a thin plate, and may be connected to (e.g., coupled to or attached to) the opening of the case 20. An electrolyte injection port 32, in which a sealing stopper 33 may be installed, may be formed in the cap plate 31. A vent portion 34 having a notch 34a may be installed in the cap plate 31.

The positive and negative electrode terminals 21 and 22 may be electrically connected to positive and negative electrode current collectors 40 and 50 welded to the positive electrode uncoated portion 11a and the negative electrode uncoated portion 12a. For example, the positive and negative electrode terminals 21 and 22 may be connected to (e.g., coupled to or attached to) the positive and negative electrode current collectors 40 and 50, respectively, by welding, or may be integrally connected (e.g., coupled or attached) thereto.

The positive and negative electrode terminals 21 and 22 welded to the positive and negative electrode current collectors 40 and 50 may be connected to (e.g., coupled to or attached to) one end of first and second separating members 80 and 90 and first and second lower insulating members 60 and 70.

While the battery cells 110 that are arranged along a line to form a single cell row has been described, the present disclosure is not limited thereto, and a plurality of cell rows may be arranged depending on the desired output of the battery module 500 as would be understood by those having ordinary skill in the art.

The battery cells 110 may be electrically connected to each other by the bus bars 130 that connects adjacent positive electrode terminals 21 and negative electrode terminals 22 to each other.

The bus bar 130 may be formed of a conductive member that electrically connects the adjacent battery cells 110 to each other by connecting (e.g., coupling or attaching) the positive electrode terminals 21 or the negative electrode terminals 22 of the adjacent battery cells 110 to each other. For example, the bus bar 130 may be formed of a low-resistance metal plate, and may be connected to the positive electrode terminal 21 or the negative electrode terminal 22 of the battery cells 110 that are adjacent to each other.

In other words, the battery cells 110 may be aligned so that the positive electrode terminals 21 and the negative electrode terminals 22 are alternately arranged along the first direction I, and the bus bars 130 may connect the positive electrode terminals 21 and the negative electrode terminals 22 of the adjacent battery cells 110 to each other. Accordingly, at least some of the battery cells 110 provided in the battery array 100 may be connected in series to each other by the bus bars 130.

In the present embodiments, the bus bars 130 may be arranged in a line along opposite end portions of each battery cell 110 in the second direction II, and the vent portion 34 may be exposed in the center of the battery cell 110.

In some embodiments, the flat plate holder 200 may be provided as a flat or substantially flat plate that covers the upper portion of the battery array 100 and fixes the bus bar 130. The battery controller 400 for controlling the battery module 500, or a cooling means (e.g., a cooler) capable of absorbing driving heat of each battery cell 110, may be arranged on the upper surface of the flat plate holder 200.

For example, the flat plate holder 200 may have a plurality of through openings passing through regions corresponding to the bus bars 130. Accordingly, the bus bars 130 may be arranged to protrude to above the flat plate holder 200 through the through openings. The bus bar 130 may be supported by the flat plate holder 200 that defines the through openings, and may suppress a vibration in the first direction I and the second direction II.

The region where the bus bar 130 is not positioned may be covered with the flat plate holder 200 to separate the battery cell 110 from the outside, and thus, to protect the battery cell 110 from external impacts. However, the flat plate holder 200 corresponding to the vent portion 34 may be opened, such that gas discharged from the battery cell 110 may be discharged to the outside.

Accordingly, the flat plate holder 200 functions as a primary cover that covers the upper portion of the battery cell 110 accommodated in the battery frame 120, and may be provided as a base substrate on which the battery controller 400, which will be described in more detail below, may be arranged.

In some embodiments, at least one coupling portion 300 protruding in the third direction III may be arranged on the upper surface of the flat plate holder 200, and the battery controller 400 positioned on the flat plate holder 200 may be connected to (e.g., coupled to or attached to) the flat plate holder 200 by the coupling portion 300.

For example, the battery controller 400 may include a signal transmission substrate 410 arranged on the upper surface of the flat plate holder 200 and individually connected to the battery cells 110 to detect information about the operating state of the battery cell 110, and a controller (e.g., a battery controller) 420 connected to the signal transmission substrate 410 to process the transmitted operation information and individually control the operations of the battery cells 110.

The signal transmission substrate 410 may be provided as a flexible printed circuit board (FPCB) having a detection line 411 connected to each bus bar 130, and the controller 420 may include a microprocessor connected to (e.g., coupled to or attached to) the FPCB.

The FPCB may be provided in the shape of a flexible thin film to reduce the installation area and allow additional terminals such as fuses to be freely arranged. In the present embodiments, the battery operation information may include the voltage and operating temperature of the individual battery cells 110. However, this is only an example, and in addition to the voltage and operating temperature, a variety of operation information may be included according to the needs of the battery module 500 or the battery pack 1000 with the battery module 500, as will be described later.

When individual operation information of the battery cells 110 is collected through the detection line 411, the operation information may be processed and the respective battery cells 110 may be individually controlled to drive the battery module 500 in an optimal operating state.

In the present embodiments, the controller 420 may include a battery management system (BMS) that performs monitoring for each of the battery cells 110, cell balancing to reduce deviation between the battery cells 110, and cell operation control for suppressing overcharge and overdischarge of the individual battery cells 110.

The controller 420 may be connected to (e.g., coupled to or attached to) the coupling portion 300 together with the signal transmission substrate 410 positioned therebelow, and may be fixed to the flat plate holder 200.

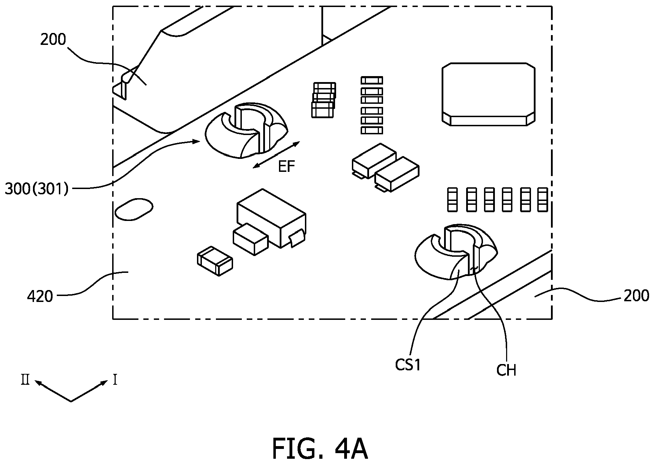

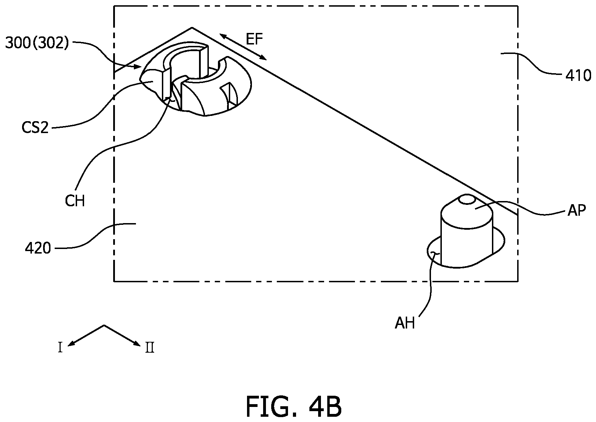

The battery controller 400 has a plurality of coupling holes CH and a pair of alignment holes AH (e.g., see FIGS. 4A and 4B). The plurality of coupling portions 300 inserted into the coupling holes CH and a pair of alignment pins AP inserted into the alignment holes AH may be arranged in the flat plate holder 200.

In the present embodiments, because the battery module 500 is provided in a hexahedral shape with a rectangular cross-section defined by the first direction I and the second direction II, the flat plate holder 200 may be provided as a rectangular flat plate that covers the upper surface of the battery frame 120. Accordingly, the battery controller 400 may also be provided in a rectangular shape extending in the first direction.

The alignment pins AP may be arranged at a pair of symmetrical corners with a rectangular shape so as to determine the position of the battery controller 400 having a square shape on the flat plate holder 200. By connecting (e.g., coupling or attaching) the alignment hole AH to the alignment pin AP, each coupling portion 300 may be automatically inserted into a corresponding coupling hole CH.

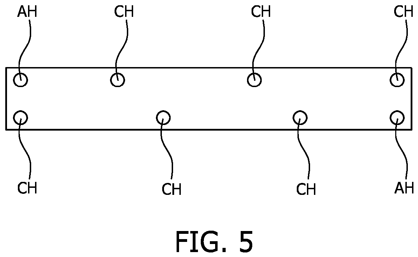

FIG. 4A illustrates a perspective view showing a coupled state of the coupling portion and the battery controller in the first direction. FIG. 4B illustrates a perspective view showing a coupled state of the coupling portion and the battery controller in the second direction. FIG. 5 illustrates coupling holes and alignment holes arranged in the battery controller 400 according to one or more embodiments of the present disclosure.

Referring to FIGS. 4A, 4B, and 5, a plurality of coupling holes CH may be arranged along the periphery of the battery controller 400 having a rectangular shape, and a pair of alignment holes AH may be arranged in corner regions that are positioned symmetrically with each other. Accordingly, a plurality of coupling portions 300 and a pair of alignment pins AP may be positioned in the flat plate holder 200, so as to correspond to the coupling holes CH and alignment holes AH.

The coupling portions 300 may include length coupling portions 301 arranged at regular or substantially regular intervals along the first direction I, and width coupling portions 302 arranged at regular or substantially regular intervals along the second direction II. The length coupling portions 301 may be connected to (e.g., coupled to or attached to) the coupling holes CH arranged at the periphery along the length of the battery controller 400, and the width coupling portions 302 may be connected to (e.g., coupled to or attached to) the coupling holes CH arranged at the periphery along the width of the battery controller 400.

When the battery controller 400 is positioned on the flat plate holder 200 so that the alignment pins AP are inserted into the alignment holes AH, the length coupling portions 301 may be inserted into the coupling holes CH along the periphery of the battery controller 400 in the first direction I, and the width coupling portions 302 may be inserted into the coupling holes CH along the peripheral of the battery controller 400 in the second direction II.

Therefore, the alignment pin AP aligns the coupling portion 300 and the coupling hole CH with each other, and the coupling portion 300 may be in close contact with the coupling hole CH. Thus, the battery controller 400 may be connected to (e.g., coupled to or attached to) the coupling portion 300 by an elastic force EF generated from the coupling portion 300. Accordingly, it may be possible to prevent or substantially prevent a slipping or a vibration between the coupling portion 300 and the battery controller 400.

In the present embodiments, because the coupling portion 300 may be provided integrally with the flat plate holder 200, the battery controller 400 may be stably fixed to the flat plate holder 200 by the coupling portion 300.

In more detail, the coupling portion 300 may be blocked from contacting the battery controller 400 by cutting opposite sides depending on the position.

For example, the length coupling portion 301 may be provided with a first cutting surface CS1 having a normal vector in the second direction II by cutting opposite sides of the coupling portion 300 along the first direction I. Therefore, the first cutting surface CS1 and the coupling hole CH may be spaced apart from each other, and the length coupling portion 301 may contact the battery controller 400 in the first direction I and may be spaced apart from the battery controller 400 in the second direction II.

Accordingly, the length coupling portion 301 suppresses a deformation or a vibration of the battery controller 400 in the first direction I, but does not restrain a deformation or a vibration of the battery controller 400 in the second direction II.

Similarly, the width coupling portion 302 may be provided with a second cutting surface CS2 having a normal vector in the first direction I by cutting opposite sides of the coupling portion 300 along the second direction II. Therefore, the second cutting surface CS2 and the coupling hole CH may be spaced apart from each other, and the width coupling portion 302 may contact the battery controller 400 in the second direction II and may be spaced apart from the battery controller 400 in the first direction I.

Accordingly, the width coupling portion 302 suppresses a deformation or a vibration of the battery controller 400 in the second direction II, but does not restrain a deformation or a vibration of the battery controller 400 in the first direction I.

In other words, the deformation or the vibration of the battery controller 400 in the first direction I may be suppressed by the length coupling portion 301, and the deformation or the vibration of the battery controller 400 in the second direction II may be suppressed by the width coupling portion 302.

In some embodiments, the coupling portion 300 may protrude from the flat plate holder 200 in the third direction III, and may apply the elastic force EF in the first direction I or the second direction II.

For example, the length coupling portion 301 may apply the elastic force EF in the first direction I, and the width coupling portion 302 may apply the elastic force EF in the second direction II.

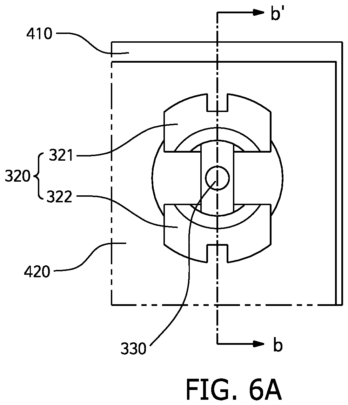

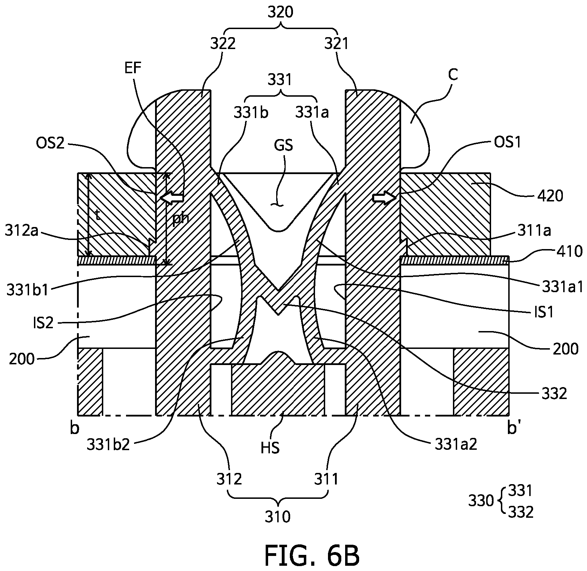

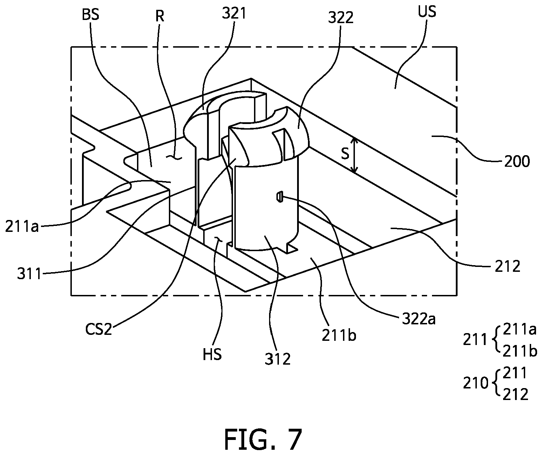

FIG. 6A illustrates a plan view showing the coupling portion of the battery module illustrated in FIG. 1. FIG. 6B illustrates a cross-sectional view of the coupling portion taken along the line b-b' illustrated in FIG. 6A. FIG. 7 illustrates a perspective view showing an arrangement relationship between the flat plate holder and the coupling portion according to one or more embodiments of the present disclosure. In FIG. 7, an arrangement relationship between the width coupling portion 302 and the flat plate holder 200 is illustrated in more detail as a representative example, but the arrangement relationship between the length coupling portion 301 and the flat plate holder 200 may be the same or substantially the same as that described in more detail hereinafter with reference to FIG. 7, and thus, redundant description thereof may not be repeated.

Referring to FIGS. 6A, 6B, and 7, the coupling portion 300 according to some embodiments of the present disclosure may include a body 310, a head 320 that covers the upper portion of the body 310 and extends outward, and an elastic body 330 arranged inside the body 310 to apply an elastic force EF to the outside. The coupling portion 300 may be arranged in a coupling step portion 210 provided in the flat plate holder 200.

The coupling step portion 210 is a coupling region having a constant or substantially constant size with respect to the coupling portion 300, and is a region where the bottom surface BS is recessed to have a constant or substantially constant step S from the upper surface US of the flat plate holder 200. Accordingly, when the battery controller 400 is connected to (e.g., coupled to or attached to) the flat plate holder 200, the coupling step portion 210 may be covered with the battery controller 400.

The bottom portion of the coupling step portion 210 may include a base plate 211 that is cut by a line-type holder slot HS and connected to (e.g., coupled to or attached to) the body 310, and a strength reinforcement plate 212 that is separated from the base plate 211 by the holder slot HS and positioned on opposite sides of the base plate 211 to reinforce the strength of the flat plate holder 200.

In more detail, the holder slot HS is provided in an H shape to separate the base plate 211 and the strength reinforcement plate 212, and concurrently or substantially simultaneously bisect the base plate 211. A first pillar 311 and a second pillar 312 constituting the body 310 may protrude from the end portion of the bisected base plate 211 in the third direction III.

Accordingly, the body 310 includes the first pillar 311 protruding from the end portion of a first base plate 211a, and the second pillar 312 arranged spaced apart from the first base plate 211a by the holder slot HS and protruding from the end portion of a second base plate 211b. A space between the first pillar 311 and the second pillar 312 may be provided as a gap space GS, which is the central portion of the body 310.

In the present embodiments, the first pillar 311 and the second pillar 312 may be positioned symmetrically or substantially symmetrically as each other with respect to the holder slot HS, and the gap space GS may be connected to the holder slot HS and communicate with the lower portion of the flat plate holder 200.

For example, the first pillar 311 and the second pillar 312 may be formed as portions of circular cylinders facing each other. Accordingly, a first inner surface IS1 and a second inner surface IS2, which are the inner surfaces of the first pillar 311 and the second pillar 312, may be provided with concave surfaces. A first outer surface OS1 and a second outer surface OS2, which are the outer surfaces of the first pillar 311 and the second pillar 312, may be provided with convex surfaces.

The first outer surface OS1 and the second outer surface OS2 may have the same or substantially the same curvature as that of the inner surface of the coupling hole CH provided in the battery controller 400, such that the first pillar 311 and the second pillar 312 may be inserted into the coupling hole CH by press fitting. The first inner surface IS1 and the second inner surface IS2 may define the gap space GS having smaller curvatures than those of the first outer surface OS1 and the second outer surface OS2, respectively.

The elastic body 330 may be connected to the first inner surface IS1 and the second inner surface IS2. A first coupling reinforcement protrusion 311a and a second coupling reinforcement protrusion 312a may be respectively arranged on the first outer surface OS1 and the second outer surface OS2 to reinforce the coupling between the battery controller 400 and the body 310.

Grooves corresponding to the first and second coupling reinforcement protrusions 311a and 312a may be arranged on the inner surface of the coupling hole CH. Accordingly, when the battery controller 400 is inserted into the body 310, the first and second coupling reinforcement protrusions 311a and 312a may be accommodated in the grooves in the region adjacent to the flat plate holder 200.

Because the first pillar 311 and the second pillar 312 may be symmetrically positioned to face each other, the battery controller 400 may be stably connected (e.g., coupled or attached) by a pair of the first and second coupling reinforcement protrusions 311a and 312a arranged symmetrically with each other.

In the present embodiments, a single coupling reinforcement protrusion arranged on each of the first pillar 311 and the second pillar 312 is illustrated, but the present disclosure is not limited thereto, and more coupling reinforcement protrusions may be arranged depending on a size of the desired coupling force.

The first pillar 311 and the second pillar 312 may have a protrusion height ph corresponding to the thickness of the battery controller 400 from the upper surface US of the flat plate holder 200. In other words, the protrusion height ph may correspond to the sum of the thickness of the signal transmission substrate 410 and the thickness t of the controller 420.

The signal transmission substrate 410 may be positioned to be sandwiched between the first and second coupling reinforcement protrusions 311a and 312a and the upper surface US of the flat plate holder 200. The controller 420 is positioned on the signal transmission substrate 410, so as to be connected to (e.g., coupled to or attached to) the first and second coupling reinforcement protrusions 311a and 312a.

Accordingly, the battery controller 400 is arranged on the flat plate holder 200 and connected to (e.g., coupled to or attached to) the body 310 that is integrally formed with the flat plate holder 200. As such, the battery controller 400 is connected to (e.g., coupled to or attached to) the flat plate holder 200 via the body 310.

The head 320 extends from the upper ends of the first pillar 311 and the second pillar 312 in one of the first direction I or the second direction II, and is positioned on the upper surface US of the battery controller 400 connected to (e.g., coupled to or attached to) the body 310.

For example, the head 320 may include a first head 321 extending from the upper end of the first pillar 311 in a direction parallel to or substantially parallel to the upper surface US of the flat plate holder 200 outward from the first pillar 311, and a second head 322 extending from the upper end of the second pillar 312 in a direction parallel to or substantially parallel to the upper surface US of the flat plate holder 200 outward from the second pillar 312.

The head 320 of the length coupling portion 301 aligned in the first direction I may extend in the first direction I, and the head 320 of the width coupling portion 302 aligned in the second direction II may extend in the second direction II.

In more detail, the surface of the head 320 may be provided in the shape of a curved surface C facing downward toward the flat plate holder 200, such that the body 310 may be inserted into the coupling hole CH by moving (e.g., by easily moving) the battery controller 400 from the top to the bottom of the head 320. Accordingly, the battery controller 400 and the coupling portion 300 may be easily fastened to each other.

The coupling hole CH of the battery controller 400 has a larger size than that of the head 320, but may be deformed into the gap space GS, such that the first pillar 311 and the second pillar 312 are close to each other. Accordingly, the head 320 may be inserted into the coupling hole CH. As such, the body 310 may be inserted into the coupling hole CH of the battery controller 400.

In this case, because the overall height of the coupling portion 300 increases due to the step S and the height of the head 320, and the first base plate 211a and the second base plate 211b are divided by the holder slot HS, the magnitude of the body deformation moment for deformation into the gap space GS at the end portions of the first pillar 311 and the second pillar 312 may be increased.

Because the elastic body 330 connected to the first pillar 311 and the second pillar 312 may be arranged in the gap space GS, the elastic body 330 may be compressed (e.g., may be easily compressed) by the body deformation moment. The elastic body 330 compressed by the body deformation moment is restored after the body 310 is inserted into the coupling hole CH, and presses the body 310 against the battery controller 400 with an initial compression energy.

For example, the elastic body 330 may include a pair of connection straps 331 that are connected to (e.g., coupled to or attached to) the first inner surface IS1 and the second inner surface IS2. The pair of connection straps 331 may be spaced apart from each other in the gap space GS, may have a first elastic modulus, and may be initially compressed. The elastic body 330 may further include a connection strap 332 that connects the pair of connection straps 331 to each other in the gap space GS. The connection strap 332 may have a second elastic modulus greater than the first elastic modulus, and may be initially compressed.

The connection strap 331 may include a first vertical strap 331a and a second vertical strap 331b individually connected to (e.g., coupled to or attached to) the first inner surface IS1 of the first pillar 311 and the second inner surface IS2 of the second pillar 312, and extending in the third direction III.

The first vertical strap 331a may include a first upper coupling end 331 a1 connected to the upper portion of the first inner surface IS1 and extending downward in the third direction III, and a first lower coupling end 331 a2 connected to the lower portion of the first inner surface IS1 or the first base plate 211a, extending upward in the third direction III, and connected to the first upper coupling end 331a1.

The first upper coupling end 331a1 may be connected to (e.g., coupled to or attached to) the upper end of the first pillar 311 in a C-shape downward to the left, and may be gradually compressed when the battery controller 400 is inserted into the head 320.

In addition, the first lower coupling end 331a2 may be generally connected to (e.g., coupled to or attached to) the lower end of the first pillar 311 or the first base plate 211a in an L-shape, and may provide a rigidity capable of maintaining the coupled shape after the body 310 and the battery controller 400 are connected to (e.g., coupled to or attached to) each other.

Similarly, the second vertical strap 331b may include a second upper coupling end 331b1 connected to the upper portion of the second inner surface IS2 and extending downward in the third direction III, and a second lower coupling end 331b2 connected to the lower portion of the second inner surface IS2 or the second base plate 211b, extending upward in the third direction III, and connected to the second upper coupling end 331b1.

The second upper coupling end 331b1 may be connected to (e.g., coupled to or attached to) the upper end of the second pillar 312 in an inverted C-shape downward to the right, and may be gradually compressed when the battery controller 400 is inserted into the head 320.

In addition, the second lower coupling end 331b2 may be generally connected to (e.g., coupled to or attached to) the lower end of the second pillar 312 or the second base plate 211b in an inverted L-shape, and may provide a rigidity capable of maintaining the coupled shape after the body 310 and the battery controller 400 are connected to (e.g., coupled to or attached to) each other.

Accordingly, the first upper coupling end 331a1 and the second upper coupling end 331b1 may gradually store the deformation moment of the body 310 as compression energy when the battery controller 400 passes through the head 320.

The first lower coupling end 331a2 and the second lower coupling end 331b2 may have a sufficient rigidity to maintain the shape and posture thereof, and may function as a base for applying the elastic force EF when the body 310 and the battery controller 400 are connected (e.g., coupled or attached) to each other and the battery controller 400 is pressed with the elastic force EF.

The connection strap 332 may be provided as a horizontal strap connecting the first vertical strap 331a and the second vertical strap 331b to each other in the first direction I or the second direction II.

For example, the connection strap 332 may connect the connection portion of the first upper coupling end 331a1 and the first lower coupling end 331a2 to the connection portion of the second upper coupling end 331b1 and the second lower coupling end 331b2 in the first direction I or the second direction II.

The connection strap 332 of the length coupling portion 301 may connect the first vertical strap 331a and the second vertical strap 331b to each other in the first direction I, and the connection strap 332 of the width coupling portion 302 may connect the first vertical strap 331a and the second vertical strap 331b to each other in the second direction II.

In the present embodiments, the connection strap 332 that horizontally connects the first vertical strap 331a and the second vertical strap 331b to each other may be provided as a symmetrical strap having at least one V-shaped cross-section.

The V-shaped cross-section may facilitate the compression and the restoration of the connection strap 332 in the process of connecting (e.g., coupling or attaching) the battery controller 400 to the coupling portion 300. Accordingly, the connection strap 332 may have various suitable cross-sectional shapes, as long as the connection strap 332 may be compressed and restored (e.g., may be easily compressed and restored).

In more detail, the connection strap 332 may have a larger elastic modulus than that of the connection strap 331, and thus, may store a greater compression energy than that of the connection strap 331 for the same deformation moment. When the coupling of the battery controller 400 and the body 310 is completed, the connection strap 332 may apply a greater elastic force EF to the battery controller 400 than that of the connection strap 331.

The connection strap 332 is supported on the first lower coupling end 331a2 and the second lower coupling end 331b2, which have a relatively higher rigidity, and applies an elastic force EF directed outward of the body 310 to the first upper coupling end 331a1 and the second upper coupling end 331b1.

In this case, a first elastic coefficient, which is the elastic coefficient of the first upper coupling end 331a1 and the second upper coupling end 331b1, may be smaller than a second elastic coefficient, which is the elastic coefficient of the connection strap 332, such that the compression energy of the connection strap 332 may be efficiently transmitted to the body 310.

Accordingly, the battery controller 400 may be provided integrally with the flat plate holder 200 without a separate heat fusion process or a bolting process, and may be fixed to the flat plate holder 200 by the coupling portion 300 capable of applying the elastic force EF.

By coupling the battery controller 400 and the coupling portion 300 in close contact with each other by the elastic force EF of the elastic body 330 provided in the coupling portion 300, the separation of the battery controller 400 and the flat plate holder 200 from each other due to an impact or a vibration may be prevented or substantially prevented.

The magnitude of the elastic force EF that brings the battery controller 400 and the coupling portion 300 into close contact with each other may vary depending on the material of the flat plate holder 200 and the shape of the elastic body 330. In more detail, the magnitude of the elastic force EF may be effectively adjusted by changing the shape of the elastic body 330 in the flat plate holder 200 formed of the same material as each other.

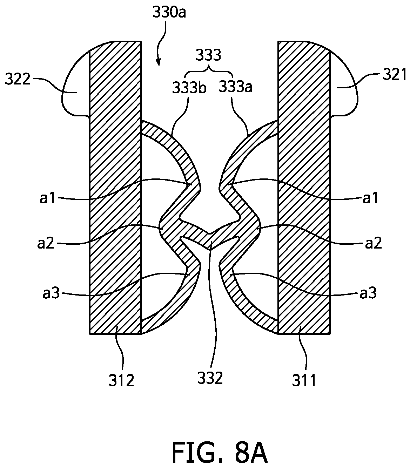

FIGS. 8A through 8D illustrate various embodiments of the elastic body illustrated in FIG. 6B.

Referring to FIG. 8A, a first deformable elastic body 330a may have the same or substantially the same configuration as that of the elastic body 330, except for a first deformable connection strap 333 may be different.

The first deformable connection strap 333 may include a first right deformable vertical strap 333a arranged in a first pillar 311, and a first left deformable vertical strap 333b arranged in a second pillar 312.

The first right and first left deformable vertical straps 333a and 333b are provided with curved shapes in which concave portions a1 and convex portions a2 are alternately arranged along the third direction III. Accordingly, a compression and a restoration of the first deformable elastic body 330a may be easily performed due to the shape in which the concave portions and the convex portions are alternately arranged.

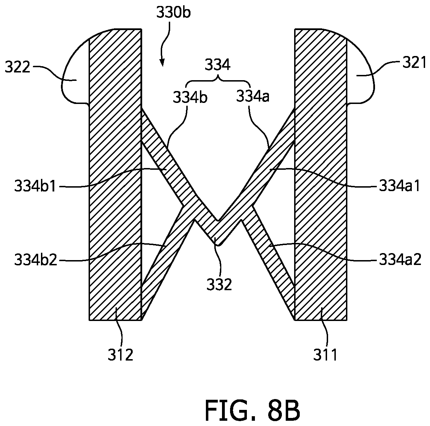

Referring to FIG. 8B, a second deformable elastic body 330b may have the same or substantially the same configuration as that of the elastic body 330, except for a second deformable connection strap 334 may be different.

The second deformable connection strap 334 may include a second right deformable vertical strap 334a arranged in the first pillar 311, and a second left deformable vertical strap 334b arranged in the second pillar 312.

The second right and second left deformable vertical straps 334a and 334b have the same or substantially the same configuration as those of the first and second vertical straps 331a and 331b, except that upper coupling ends 334a1 and 334b1 and lower coupling ends 334a2 and 334b2 extending in the third direction III may have a planar shape rather than a curved shape.

In other words, the second right and second left deformable vertical straps 334a and 334b may have the same or substantially the same configuration as that of the connection strap 331 illustrated in FIG. 6B, except that the curved straps are replaced with planar straps.

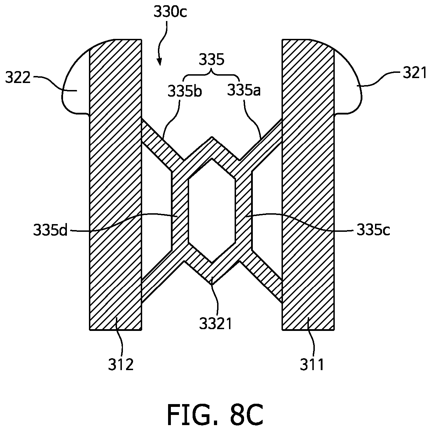

Referring to FIG. 8C, a third deformable elastic body 330c may include a third deformable connection strap 335, and a first deformable connection strap 3321 having intermediate coupling ends 335c and 335d.

The third deformable connection strap 335 may include a third right deformable vertical strap 335a arranged in the first pillar 311, and a third left deformable vertical strap 335b arranged in the second pillar 312.

In the third right and third left deformable vertical straps 335a and 335b, the intermediate coupling ends 335c and 335d may be arranged between the upper coupling ends and the lower coupling ends having the planar shape illustrated in FIG. 8B, and thus, the right and left deformable vertical straps 335a, 335b may each have two connection points.

Accordingly, the first deformable connection strap 3321 is provided with a pair of planar straps having a V-shaped cross-section and an inverted V-shaped cross-section at each connection point to form a closed loop strap.

Accordingly, the compression and restoration characteristics of the first deformable connection strap 3321 may be improved, and the stored compression energy may be increased.

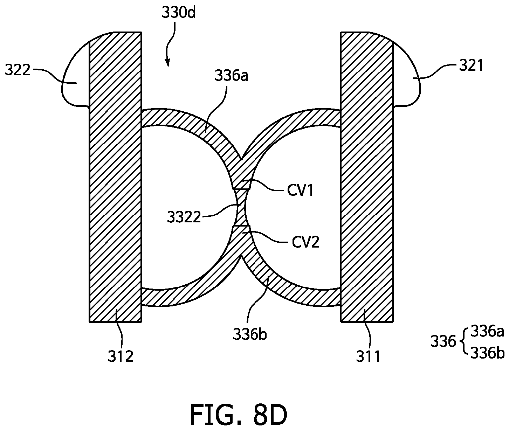

Referring to FIG. 8D, a fourth deformable elastic body 330d may include a fourth deformable connection strap 336 provided as a horizontal strap, and a second deformable connection strap 3322 provided as a vertical strap.

The fourth deformable connection strap 336 may include an upper strap 336a commonly arranged on the first pillar 311 and the second pillar 312 and extending in one of the first direction I or the second direction II, and a lower strap 336b commonly arranged below the first pillar 311 and the second pillar 312 and extending in one of the first direction I or the second direction II.

In other words, the fourth deformable connection strap 336 is provided as a horizontal strap commonly and concurrently or substantially simultaneously connected to the first pillar 311 and the second pillar 312.

To connect the fourth deformable connection strap 336 provided as a horizontal strap at the upper and lower portions of the first pillar 311 and the second pillar 312, the second deformable connection strap 3322 may be arranged between the upper strap 336a and the lower strap 336b, and may be provided as a vertical strap extending in the third direction III.

In this case, the fourth deformable connection strap 336 aligned in the longitudinal direction of the battery controller 400 may extend in the first direction I, and the fourth deformable connection strap 336 aligned in the width direction of the battery controller 400 may extend in the second direction II.

In the present embodiments, the upper strap 336a and the lower strap 336b may each be formed as a curved shape (e.g., a curved strap) having first and second inflection portions CV1 and CV2, and the second deformable connection strap 3322 may be formed as a line shape (e.g., a line-shaped strap) connected to the first inflection portion CV1 of the upper strap 336a and the second inflection portion CV2 of the lower strap 336b.

In some embodiments, the first vertical strap 331a and the second vertical strap 332b in FIG. 6B may not be arranged symmetrically with each other. In other words, the first vertical strap 331a and the second vertical strap 332b may have different sizes from each other, and be arranged at different positions from each other.

In some embodiments, the connection strap 332 illustrated in FIG. 6B is shown as having a single V-shaped cross-section, but the present disclosure is not limited thereto, and may be provided as a strap having two or more V-shaped cross-sections or having a cylindrical shape.

According to some embodiments of the present disclosure as described above, the battery controller 400 may be fixed to the flat plate holder 200 by the coupling portion 300 provided integrally with the flat plate holder 200 without using a separate heat fusion process or a bolting process.

According to some embodiments of the present disclosure, by arranging the elastic body 330 that generates the elastic force EF in the coupling portion 300, the battery controller 400 and the coupling portion 300 may be tightly connected to (e.g., coupled to or attached to) each other by the elastic force EF of the elastic body 330.

According to some embodiments of the present disclosure, the battery controller 400 may be fixed (e.g., may be easily fixed) to the flat plate holder 200 while effectively preventing the separation of the battery controller 400 and the flat plate holder 200 from each other due to an impact or a vibration.

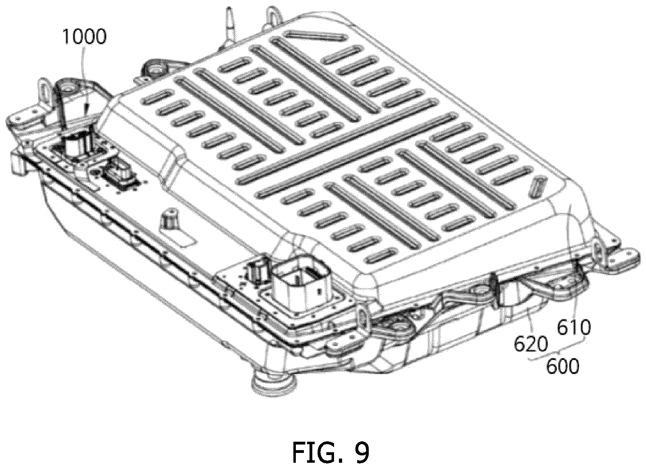

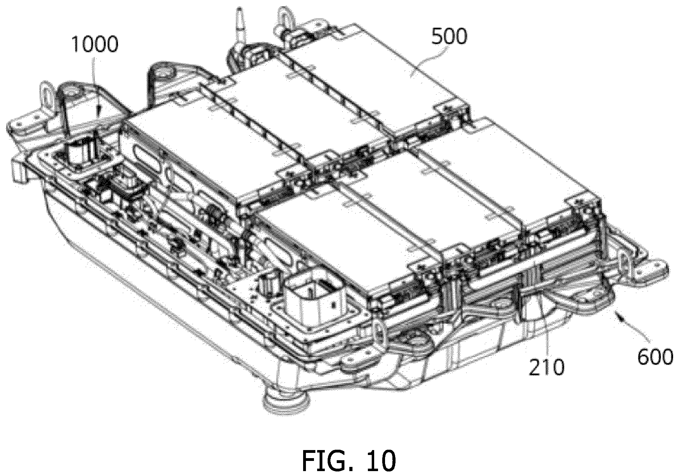

FIG. 9 illustrates a top perspective view showing a battery pack including the battery module illustrated in FIG. 1. FIG. 10 illustrates a perspective view showing the battery pack of FIG. 9 with an upper housing removed.

Referring to FIGS. 9 and 10, a battery pack 1000 according to some embodiments of the present disclosure may include a plurality of battery modules 500, and a housing 600 for accommodating the battery modules 500.

For example, the housing 600 may include upper and lower housings 610 and 620 that accommodate the battery modules 500, and are connected to (e.g., coupled to or attached to) each other in a direction facing each other.

The battery module 500 may be arranged in an appropriate number depending on the desired output. The battery modules 500 may be electrically connected to each other by using the bus bars 130, and the battery modules 500 may be electrically connected to each other in a series/parallel or series-parallel mixed manner by module bus bars to obtain the desired electrical output.

A battery controller 400 may be arranged in each battery module 500 to control the operating state of each battery cell 110, and the battery controller 400 provided in each battery module 500 may be controlled by a pack control center.

In more detail, the battery controller 400 of each battery module 500 may be directly fixed to the flat plate holder 200 that fixes the bus bars 130 by the coupling portion 300 without using a heat fusion or a bolting process.

The coupling portion 300 may be provided integrally with the flat plate holder 200, and the elastic body 330 capable of generating an elastic force EF may be arranged inside the coupling portion 300, such that the battery controller 400 and the coupling portion 300 may be stably brought into close contact with each other by the elastic force EF.

Accordingly, even when various external impacts or vibrations are applied while driving the battery pack 1000, the battery controller 400 and the flat plate holder 200 may be stably fixed to each other. As such, the operational reliability and stability of the battery pack 1000 may be increased by improving the operational reliability of the battery controller 400 in the individual battery modules.

Because the battery module 500 may have the same or substantially the same configuration as the battery module 500 described above with reference to FIGS. 1 through 8D, redundant description thereof may not be repeated.

According to some embodiments of the present disclosure, the battery module 500 may include the coupling portion 300 that may connect (e.g., couple or attach) the battery controller 400 to the flat plate holder 200 without using a separate heat fusion or a bolting process. The coupling portion 300 may be provided integrally with the flat plate holder 200, and the elastic body 330 may be arranged inside the coupling portion 300, such that the battery controller 400 and the coupling portion 300 may be stably brought into close contact with each other by the elastic force EF.

Accordingly, even when an impact or a vibration is applied to the battery module 500, the battery controller 400 may be stably fixed to the flat plate holder 200, and the battery module 500 may increase the operational reliability and stability of the battery pack 1000.

The electronic or electric devices and/or any other relevant devices or components according to embodiments of the present disclosure described herein (e.g., the battery controller, the controller, and the like) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Although the present disclosure has been described above with respect to embodiments thereof, the present disclosure is not limited thereto. Various modifications and variations can be made thereto by those skilled in the art within the present disclosure and the equivalent scope of the appended claims.

### DESCRIPTION OF SOME REFERENCE SYMBOLS

100: battery array
110: battery cell
120: battery frame
130: bus bar
200: flat plate holder
210: coupling step portion
300: coupling portion
310: body
320: head
330: elastic body
400: battery controller
410: signal transmission substrate
420: controller
500: battery module
600: housing
610: upper housing
620: lower housing
1000: battery pack

## Claims

1. A battery module (500) comprising:
a battery array (100) comprising a plurality of battery cells (110) connected by a plurality of bus bars, and having a length in a first direction I and a width in a second direction II perpendicular to the first direction I;
a flat plate holder (200) on the battery array (100) to fix the bus bars (130);
at least one coupling portion (300) protruding from the flat plate holder (200) in a third direction (III) perpendicular to the first direction (I) and the second direction (II), and configured to apply an elastic force (EF) in one of the first direction (I) or the second direction (II); and
a battery controller (400) connected to the coupling portion (300) by the elastic force (EF) and fixed to the flat plate holder (200), the battery controller (400) being configured to detect operating states of the battery cells (110) and individually control the battery cells (110).

2. The battery module (500) as claimed in claim 1, wherein the coupling portion (300) comprises:
a body (310) protruding from the flat plate holder (200), and configured to be inserted into a coupling hole (CH) of the battery controller (400), the body (310) comprising a first pillar (311) and a second pillar (312) spaced from each other, inner surfaces of the first pillar (311) and the second pillar (312) facing each other to define a gap space (GS) therebetween;
a head (320) on an upper surface of the battery controller (400) coupled to the body (310), and extending from upper ends of the first pillar (311) and the second pillar (312) in one of the first direction (I) or the second direction (II); and
elastic bodies (330) fixed to the inner surfaces of the first pillar (311) and the second pillar (312) facing each other in the gap space (GS), and configured to generate the elastic force (EF) to press and fix the body (310) to the battery controller (400).

3. The battery module (500) as claimed in claim 1 or 2, wherein the flat plate holder (200) comprises a coupling step portion (210) that surrounds the body (310), and has a step (S) with respect to an upper surface (US) thereof.

4. The battery module (500) as claimed in claim 3, wherein the coupling step portion (210) has a line-shaped holder slot (HS) passing through a bottom surface thereof, and the first pillar (311) and the second pillar (312) are located symmetrically with each other with respect to the holder slot (HS).

5. The battery module (500) as claimed in any of claims 2 to 4, wherein the first pillar (311) and the second pillar (312) comprise at least one coupling reinforcement protrusion (311a, 312a) on an outer surface thereof corresponding to an inner surface from among the inner surfaces to reinforce a coupling force for the battery controller (400).

6. The battery module (500) as claimed in any of claims 2 to 5, wherein the elastic bodies (330) comprise:
a pair of connection straps (331) coupled to a pair of the inner surfaces facing each other, the pair of connection straps (331) being spaced from each other in the gap space (GS), having a first elastic modulus, and being initially compressed; and
a connection strap (332) connecting the pair of connection straps (331) to each other in the gap space (GS), the connection strap (332) having a second elastic modulus greater than the first elastic modulus, and being initially compressed.

7. The battery module (500) as claimed in claim 6, wherein the pair of connection straps (331) comprises:
a first vertical strap (331a) coupled to the first pillar (311) and extending in the third direction (III); and
a second vertical strap (331b) coupled to the second pillar (312) and extending in the third direction (III), and
wherein the connection strap (332) comprises a horizontal strap connecting the first vertical strap (331a) and the second vertical strap (331b) to each other in one of the first direction (I) or the second direction II.

8. The battery module (500) as claimed in claim 7, wherein each of the first vertical strap (331a) and the second vertical strap (331b) comprises:
an upper coupling end (331a1, 331 b1) connected to an upper portion of a corresponding inner surface from among the inner surfaces, and extending downward in the third direction (III); and
a lower coupling end (331a2, 331b2) connected to a lower portion of the corresponding inner surface, and extending upward in the third direction (III), and
wherein the horizontal strap is connected to a connection portion of the upper coupling end (331a1, 331b1) and the lower coupling end (331a2, 331b2).

9. The battery module (500) as claimed in claim 7 or 8, wherein each of the first vertical strap (331a) and the second vertical strap (331b) further comprises an intermediate coupling end (335c, 335d) extending in the third direction (III), and connecting the upper coupling end (331a1, 331b1) and the lower coupling end (331a2, 331b2) to each other, and
wherein the horizontal strap comprises a closed loop shape connected to a first connection portion connected to the upper coupling end (331a1, 331b1) and the intermediate coupling end (335c, 335d) and a second connection portion connected to the lower coupling end (331a2, 331b2) and the intermediate coupling end (335c, 335d).

10. The battery module (500) as claimed in claim 6, wherein the pair of connection straps (331) comprises:
an upper strap (336a) commonly located above the first pillar (311) and the second pillar (312), and extending in one of the first direction (I) or the second direction (II); and
a lower strap (336b) commonly located below the first pillar (311) and the second pillar (312), and extending in one of the first direction (I) or the second direction (II), and
wherein the connection strap (332) comprises a vertical strap connecting the upper strap (336a) and the lower strap (336b) to each other in the third direction (III).

11. The battery module (500) as claimed in claim 10, wherein the upper strap (336a) and the lower strap (336b) each have a curved shape (CV1, CV2) comprising an inflection portion, and the vertical strap is connected to the inflection portion of the upper strap (336a) and the inflection portion of the lower strap (336b).

12. The battery module (500) as claimed in claim 1, wherein the flat plate holder (200) comprises an alignment pin (AP) protruding from an upper surface (US) of the flat plate holder (200), and
wherein the battery controller (400) has an alignment hole (AH) into which the alignment pin (AP) is configured to be inserted to determine a relative position of the battery controller (400) with respect to the flat plate holder (200).

13. A battery pack 1000 comprising:
a plurality of battery modules (500) of any of the preceding claims, the plurality of battery modules (500) being aligned along a lower housing (620), and electrically connected to each other; and
an upper housing (610) coupled to the lower housing (620) to separate the battery modules (500) from an outside.
